# EUROPEAN PATENT APPLICATION

(11) **EP 3 220 586 A1**
(43) Date of publication of application: **20.09.2017**
(21) Application number: 16869814.0
(22) Date of filing: 30.09.2016
(51) Int. Cl.: H04L 12/725

(54) **AUTHORITY MANAGEMENT METHOD AND DEVICE FOR A ROUTER, AND A ROUTER**

(30) Priority: 30.11.2015 CN 201510856235
(71) Applicant: Shanghai Fochon Pharmaceutical Co. Ltd, Shanghai 200233 (CN)
(72) Inventor: LI, Ying, Shanghai 201616 (CN)
(74) Representative: Sun, Yiming
(86) International application number: PCT/CN2016/101398
(87) International publication number: WO 2017/092503

(57) **Abstract**

The present disclosure provides a router authority management method and system, and a router. The method includes: monitoring, according to preset first user equipment information having an authority to modify router configuration information, whether information of currently connected second user equipment includes the first user equipment information; if the information of the currently connected second user equipment includes the first user equipment information, when it is monitored that a user equipment corresponding to the first user equipment information logs in to a configuration page, setting the router configuration information to a modifiable state; and if the information of the currently connected second user equipment does not include the first user equipment information, when it is monitored that the user equipment corresponding to the first user equipment information logs in to the configuration page, setting the router configuration information to a non-modifiable state. According to the present disclosure, the router configuration information may be prevented from being tampered, and a page for modifying configuration information may be automatically provided for an authorized user.

## Description

### TECHNICAL FIELD

The present disclosure relates to the field of software, and in particular, relates to a router authority management method and system and a router.

### BACKGROUND

In recent years, dramatic development of the Internet promotes advancement of routers. In the current market, routers have more and more functions, and achieve better and better user experience. However, with increase of the functions, users' expectations are promoted, which will cause problems in router management. For example, with respect to the parent control function of the router, a primary user enables this function to restrict the Internet surfing time of a selected client. However, when the user leaves home, any user using the selected client may modify the settings after logging in to the router page, and modify or delete the restriction rule set by the primary user with respect to the Internet surfing time. When the primary user does not re-check the settings of the router after going home, the primary user would not find that the settings are modified. In this case, the parent control function is invalid, the objective of this function on the router is not achieved, and troubles may be caused to the primary user.

Therefore, some improvements need to be made to the prior art.

### SUMMARY

In view of the above described defect in the prior art, an objective of the embodiments of the present disclosure is to provide a router authority management method and system, and a router, to solve the problem in the prior art that functions set in a router may be simply tampered.

To achieve the above objectives and other related objectives, the embodiments of present disclosure provides a router authority management method. The method includes the following steps: monitoring, according to preset first user equipment information with an authority to modify router configuration information, whether information of currently connected second user equipment includes the first user equipment information; if the information of the currently connected second user equipment includes the first user equipment information, when it is monitored that a user equipment corresponding to the first user equipment information logs in to a configuration page, setting the router configuration information to a modifiable state; and if the information of the currently connected second user equipment does not include the first user equipment information, when it is monitored that the user equipment corresponding to the first user equipment information logs in to the configuration page, setting the router configuration information to a non-modifiable state.

Preferably, when it is monitored that the second user equipment information corresponding to the user equipment logging in to the configuration page is not the first user equipment information, and it is monitored that the information of the currently connected second user equipment includes the first user equipment information, the method further includes:
determining a distance between the user equipment and the router according to communication data between the router and the user equipment corresponding to the first user equipment information;
judging whether the determined distance is greater than a preset authorization distance; if the determined distance is greater than the preset authorization distance, when it is monitored that the user equipment corresponding to the first user equipment information logs in to the configuration page, setting the router configuration information to a non-modifiable state; and if the determined distance is not greater than the preset authorization distance, when it is monitored that the user equipment corresponding to the first user equipment information logs in to the configuration page, setting the router configuration information to a modifiable state.

Preferably, before performing the step of monitoring whether information of currently connected second user equipment includes the first user equipment information, the method further includes: providing in advance a setting page configured to set the first user equipment information and the corresponding modifiable router configuration information, and monitoring, according to the first user equipment information acquired from the setting page and a corresponding modifiable router configuration option, whether the information of the currently connected second user equipment includes the first user equipment information.

Preferably, the setting page further includes an authorization distance configured to set the modifiable router configuration information.

In view of the above objectives, the embodiments of present disclosure further provides a router authority management system. The router authority management system includes:
a first monitoring module, configured to: monitor, according to preset first user equipment information having an authority to modify router configuration information, whether information of currently connected second user equipment includes the first user equipment information; if the information of the currently connected second user equipment includes the first user equipment information, start a second monitoring module; and if the information of the currently connected second user equipment does not include the first user equipment information, start a third monitoring module;
the second monitoring module, configured to, when it is monitored that a user equipment corresponding to the first user equipment information logs in to a configuration page, set the router configuration information to a modifiable state;
and the third monitoring module, configured to set the router configuration information to a non-modifiable state when it is monitored that the user equipment corresponding to the first user equipment information logs in to the configuration page.

Preferably, the third monitoring module includes:
a distance determining submodule, configured to, when it is monitored that the second user equipment information corresponding to the user equipment logging in to the configuration page is not the first user equipment information, and it is monitored that the information of the currently connected second user equipment includes the first user equipment information, determine a distance between the user equipment and the router according to communication data between the router and the user equipment corresponding to the first user equipment information;
a judging submodule, configured to: judge whether the determined distance is greater than a preset authorization distance; if the determined distance is greater than the preset authorization distance, start a monitoring submodule; and if the determined distance is not greater than the preset authorization distance, start the second monitoring module, and set the router configuration information to a modifiable state when it is monitored that the user equipment corresponding to the first user equipment information logs in to the configuration page;
and the monitoring submodule, configured to set the router configuration information to a non-modifiable state when it is monitored that the user equipment corresponding to the first user equipment information logs in to the configuration page.

Preferably, the router authority management system further includes:
a pre-processing module, configured to provide in advance a setting page configured to set the first user equipment information and the corresponding modifiable router configuration information, and monitor, according to the first user equipment information acquired from the setting page and a corresponding modifiable router configuration option, whether the information of the currently connected second user equipment includes the first user equipment information.

Preferably, the setting page further includes an authorization distance configured to set the modifiable router configuration information.

In view of the above objectives, the present disclosure further provides a router. The router includes a management system as described above.

As described above, the router authority management method and system, and the router according to the present disclosure have the following beneficial effects:
As mentioned above, in the router authority management method and system and router,an authority is set and user equipment information corresponding to the authority is automatically monitored, and whether router configuration information in a configuration page is modifiable is automatically adjusted. In this way, the router configuration information is effectively prevented from being tampered, and a page for modifying the configuration information is automatically provided for an authorized user. In addition, by monitoring a distance between a user equipment having the authority and a router, other users logging in to the configuration page may be simply authorized to modify the configuration page.

### BRIEF DESCRIPTION OF THE DRAWINGS

FIG. 1 is a flowchart of a router authority management method according to the present disclosure; and
FIG. 2 is a schematic structural diagram of a router authority management system according to the present disclosure.

Reference numerals and denotations thereof:
- 1: Management system
- 11: Pre-processing module
- 12: First monitoring module
- 13: Second monitoring module
- 14: Third monitoring module
- S1-S4: Steps

### DETAILED DESCRIPTION

The embodiments of the present disclosure are described hereinafter with reference to specific examples. A person skilled in the art would readily understand and know the other advantages and technical effects of the present disclosure according to the content disclosed in the specification of the present disclosure. The present disclosure may also be implemented or applied with reference to other different specific embodiments. Various details in the specification may also be according to different view points and applications, and various modifications or variations may be made without departing from the spirit of the present disclosure. It should be noted that in cases of no conflict, the embodiments and features in the embodiments of the present disclosure may be combined together.

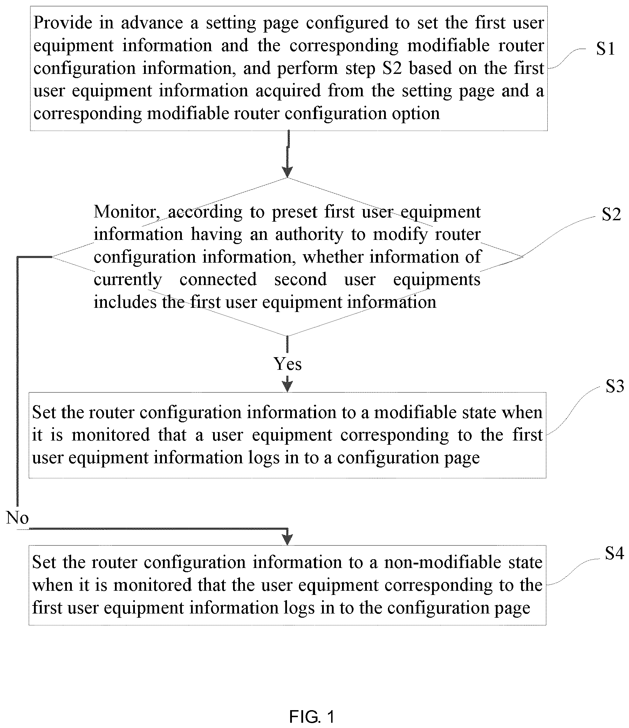

Referring to FIG. 1, the present disclosure provides a router authority management method. The authority management method is mainly performed by a management system installed in a router. The router mainly refers to a wireless router. The management system prevents configuration of the router from being tampered by performing the following steps. The management system may prestore information of a user equipment firstly connected to the router, and default router configuration information, and then step S2 is performed. The router configuration information herein includes, but not limited to: port information of the router, login information indicating login to a router configuration page, an option indicating whether the network is disconnected, a network access password of the router, network usage duration and the like.

Preferably, before the management system monitors user equipment communicatively connected to the router, step S1 is firstly performed.

In step S1, the management system provides in advance a setting page configured to set the first user equipment information and the corresponding modifiable router configuration information, and performs step S2 according to the first user equipment information acquired from the setting page and a corresponding modifiable router configuration option.

Specifically, the management system reads an information table of connected user equipment that is maintained by the router. When a user logs in to the setting page via a user equipment, in the case where no authority is set, the management system displays the setting page and acquires user equipment information of the user equipment; and displays the acquired user equipment information table and the current router configuration information option in the setting page. The user may, via the user equipment, select and input router configuration information to be restricted. The user may further select in the setting page the user equipment information as the first user equipment information. Herein, the user equipment information includes, but not limited to: IP address, MAC address, user equipment name and the like.

When the user clicks a submit button in the setting page, the management system correspondingly stores the first user equipment information and the router configuration information provided in the setting page, and starts to perform step S2.

In step S2, the management system monitors, according to preset first user equipment information having an authority to modify router configuration information, whether information of currently connected second user equipment includes the first user equipment information.

Specifically, the management system acquires the information of the currently connected second user equipment by regularly querying an information table of connected user equipment in the router, and queries whether the information table of the connected user equipment includes the preset first user equipment information. If the information table of the connected user equipment includes the preset first user equipment information, step S3 is performed; and otherwise, step S4 is performed.

In step S3, the management system sets the router configuration information to a modifiable state when it is monitored that a user equipment corresponding to the first user equipment information logs in to a configuration page.

Specifically, the management system monitors the user equipment information corresponding to the user equipment logging in to the configuration page is the preset first user equipment information. If the user equipment information corresponding to the user equipment logging in to the configuration page is the preset first user equipment information, it is determined that the user equipment has the authority to modify the router configuration information and modifies the router configuration information to a modifiable state; and otherwise, it is determined that the user equipment has no authority to modify the router configuration information, and step S4 is performed.

In step S4, the management system sets the router configuration information to a non-modifiable state when it is monitored that the user equipment corresponding to the first user equipment information logs in to the configuration page.

Specifically, when the management system monitors the second user equipment information corresponding to the user equipment logging in to the configuration page is not the preset first user equipment information, it is determined that the user equipment has no authority to modify the router configuration information, and other configuration information (for example, a remote control option and the like) irrelevant to the router configuration information in the configuration page is set to a modifiable state and the router configuration information is set to a non-modifiable state.

Preferably, when it is monitored that the second user equipment information corresponding to the user equipment logging in to the configuration page is not the first user equipment information, and it is monitored that the information of the currently connected second user equipment includes the first user equipment information, step S4 further includes: steps S41, S42, S43 and S44 (none of which is neither illustrated in the drawings).

In step S41, the management system determines a distance between the user equipment and the router according to communication data between the router and the user equipment corresponding to the first user equipment information.

Specifically, the management system may send test data to the user equipment corresponding to the first user equipment information multiple times, and determine the distance between the user equipment and the router according to a send-feedback duration.

Alternatively, the management system may determine, according to a preset corresponding relationship between transmitting power and distance, a distance corresponding to transmit power when data is transmitted to the user equipment corresponding to the first user equipment information.

In step S42, the management system judges whether the determined distance is greater than a preset authorization distance; and if the determined distance is greater than the preset authorization distance, step S43 is performed; and otherwise, step S44 is performed. Herein, the authorization distance may be set in the setting page in step S1. The authorization distance may also be a fixed value, or may be set to an unconnectable distance.

In step S43, the management system sets the router configuration information to a non-modifiable state when it is monitored that the user equipment corresponding to the first user equipment information logs in to the configuration page.

In step S44, the management system sets the router configuration information to a non-modifiable state when it is monitored that the user equipment corresponding to the first user equipment information logs in to the configuration page.

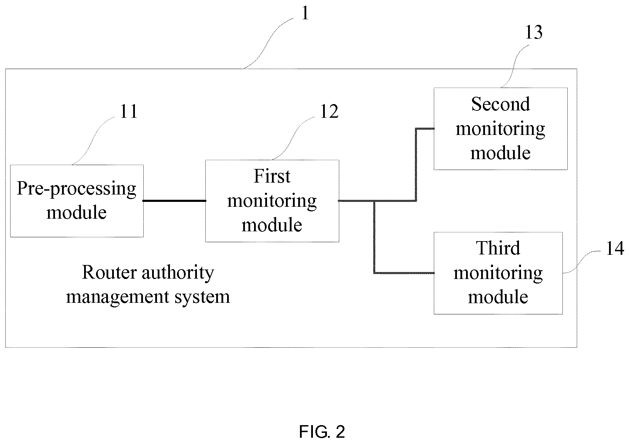

Referring to FIG. 2, the present disclosure further provides a router authority management system. The authority management system is installed in a router. The router mainly refers to a wireless router. The management system prevents configuration of the router from being tampered by performing the following steps. The management system may pre-store information of a user equipment firstly connected to the router, and default router configuration information, and then execute a first monitoring module. The router configuration information herein includes, but not limited to: port information of the router, login information indicating login to a router configuration page, an option indicating whether the network is disconnected, a network access password of the router, network usage duration and the like.

Preferably, the management system 1 includes a pre-processing module 11.

The pre-processing module 11 is configured to provide in advance a setting page configured to set the first user equipment information and the corresponding modifiable router configuration information, and executes a first monitoring module 12 according to the first user equipment information acquired from the setting page and a corresponding modifiable router configuration option.

Specifically, the pre-processing module 11 reads an information table of connected user equipment that is maintained by the router. When a user logs in to the setting page via a user equipment, in the case where no authority is set, the pre-processing module 11 displays the setting page and acquires user equipment information of the user equipment; and displays the acquired user equipment information table and the current router configuration information option in the setting page. The user may, via the user equipment, select and input router configuration information to be restricted. The user may further select in the setting page the user equipment information as the first user equipment information. Herein, the user equipment information includes, but not limited to: IP address, MAC address, user equipment name and the like.

When the user clicks a submit button in the setting page, the pre-processing module 11 correspondingly stores the first user equipment information and the router configuration information provided in the setting page, and starts to execute the first monitoring module 12.

The first monitoring module 12 is configured to monitor, according to preset first user equipment information having an authority to modify router configuration information, whether information of currently connected second user equipment includes the first user equipment information.

Specifically, the first monitoring module 12 acquires the information of the currently connected second user equipment by regularly querying an information table of connected user equipment in the router, and queries whether the information table of the connected user equipment includes the preset first user equipment information. If the information table of the connected user equipment includes the preset first user equipment information, a second monitoring module 13 is executed; and otherwise, a third monitoring module 14 is executed.

The second monitoring module 13 is configured to, when it is monitored that a user equipment corresponding to the first user equipment information logs in to a configuration page, set the router configuration information to a modifiable state.

Specifically, the second monitoring module 13 monitors the user equipment information corresponding to the user equipment logging in to the configuration page is the preset first user equipment information. If the user equipment information corresponding to the user equipment logging in to the configuration page is the preset first user equipment information, it is determined that the user equipment has the authority to modify the router configuration information and modifies the router configuration information to a modifiable state; and otherwise, it is determined that the user equipment has no authority to modify the router configuration information, and the third monitoring module 14 is executed (not illustrated in drawings).

The third monitoring module 14 is configured to set the router configuration information to a non-modifiable state when it is monitored that the user equipment corresponding to the first user equipment information logs in to the configuration page.

Specifically, when the third monitoring module 14 monitors the second user equipment information corresponding to the user equipment logging in to the configuration page is not the preset first user equipment information, it is determined that the user equipment has no authority to modify the router configuration information, and other configuration information (for example, a remote control option and the like) irrelevant to the router configuration information in the configuration page is set to a modifiable state and the router configuration information is set to a non-modifiable state.

Preferably, when it is monitored that the second user equipment information corresponding to the user equipment logging in to the configuration page is not the first user equipment information, and it is monitored that the information of the currently connected second user equipment includes the first user equipment information, the third monitoring module 14 further includes: a distance determining submodule, a judging submodule and a monitoring submodule (none of which is illustrated in the drawings).

The distance determining submodule is configured to determine a distance between the user equipment and the router according to communication data between the router and the user equipment corresponding to the first user equipment information.

Specifically, the distance determining submodule may send test data to the user equipment corresponding to the first user equipment information multiple times, and determine the distance between the user equipment and the router according to a send-feedback duration.

Alternatively, the distance determining submodule may determine, according to a preset corresponding relationship between transmit power and distance, a distance corresponding to transmit power when data is transmitted to the user equipment corresponding to the first user equipment information.

The judging submodule is configured to judge whether the determined distance is greater than a preset authorization distance. If the determined distance is greater than the preset authorization distance, the monitoring submodule is executed; and otherwise, the second monitoring module 13 is executed. Herein, the authorization distance may also be set in a setting page in the pre-processing module 11. The authorization distance may also be a fixed value, or may be set to an unconnectable distance.

The monitoring submodule is configured to set the router configuration information to a non-modifiable state when it is monitored that the user equipment corresponding to the first user equipment information logs in to the configuration page.

The second monitoring module 13 is further configured to set the router configuration information to a non-modifiable state when it is monitored that the user equipment corresponding to the first user equipment information logs in to the configuration page. In conclusion, according to the present disclosure, an authority is set and user equipment information corresponding to the authority is automatically monitored, and whether router configuration information in a configuration page is modifiable is automatically adjusted. In this way, the router configuration information is effectively prevented from being tampered, and a page for modifying the configuration information is automatically provided for an authorized user. In addition, by monitoring a distance between a user equipment having the authority and a router, other users logging in to the configuration page may be simply authorized to modify the configuration page. Therefore, the present disclosure effectively overcomes various defects in the prior art and has high industrial value.

The above embodiments are merely used for exemplarily illustrate the principles, functions and effects of the present disclosure, but are not intended to limiting the present disclosure. Any person skilled in the art would make polishments or modifications to the above embodiments without departing from the spirit and category of the present disclosure. Therefore, any equivalent polishments or modifications derived a person having common knowledge in the art without departing from the spirit and inventive concept of the present disclosure shall all be covered within the scope defined by the claims of the present disclosure.

## Claims

1. A router authority management method, comprising:
monitoring, according to preset first user equipment information having authority to modify router configuration information, whether information of currently connected second user equipment comprises the first user equipment information;
if the information of the currently connected second user equipment comprises the first user equipment information, when it is monitored that a user equipment corresponding to the first user equipment information logs in to a configuration page, setting the router configuration information to a modifiable state;
if the information of the currently connected second user equipment does not comprise the first user equipment information, when it is monitored that the user equipment corresponding to the first user equipment information logs in to the configuration page, setting the router configuration information to a non-modifiable state.

2. The router authority management method according to claim 1, wherein when it is monitored that the second user equipment information corresponding to the user equipment logging in to the configuration page is not the first user equipment information, and it is monitored that the information of the currently connected second user equipment comprises the first user equipment information, the method further comprises:
determining a distance between the user equipment and the router according to communication data between the router and the user equipment corresponding to the first user equipment information;
judging whether the determined distance is greater than a preset authorization distance;
if the determined distance is greater than the preset authorization distance, when it is monitored that the user equipment corresponding to the first user equipment information logs in to the configuration page, setting the router configuration information to a non-modifiable state; and
if the determined distance is not greater than the preset authorization distance, when it is monitored that the user equipment corresponding to the first user equipment information logs in to the configuration page, setting the router configuration information to a modifiable state.

3. The router authority management method according to claim 1, wherein prior to performing the step of monitoring whether information of currently connected second user equipment comprises the first user equipment information, the method further comprises:
providing in advance a setting page configured to set the first user equipment information and the corresponding modifiable router configuration information, and monitoring, according to the first user equipment information acquired from the setting page and a corresponding modifiable router configuration option, whether the information of the currently connected second user equipment comprises the first user equipment information.

4. The router authority management method according to claim 2 or 3, wherein the setting page further comprises an authorization distance configured to set the modifiable router configuration information.

5. A router authority management system, comprising:
a first monitoring module, configured to: monitor, according to preset first user equipment information having authority to modify router configuration information, whether information of currently connected second user equipment comprises the first user equipment information; if the information of the currently connected second user equipment comprises the first user equipment information, start a second monitoring module; and if the information of the currently connected second user equipment does not comprise the first user equipment information, start a third monitoring module;
the second monitoring module, configured to, when it is monitored that a user equipment corresponding to the first user equipment information logs in to a configuration page, set the router configuration information to a modifiable state;
the third monitoring module, configured to set the router configuration information to a non-modifiable state when it is monitored that the user equipment corresponding to the first user equipment information logs in to the configuration page.

6. The router authority management system according to claim 5, where the third monitoring module comprises:
a distance determining submodule, configured to, when it is monitored that the second user equipment information corresponding to the user equipment logging in to the configuration page is not the first user equipment information, and it is monitored that the information of the currently connected second user equipment comprises the first user equipment information, determine a distance between the user equipment and the router according to communication data between the router and the user equipment corresponding to the first user equipment information;
a judging submodule, configured to: judge whether the determined distance is greater than a preset authorization distance; if the determined distance is greater than the preset authorization distance, start a monitoring submodule; and if the determined distance is not greater than the preset authorization distance, start the second monitoring module, and set the router configuration information to a modifiable state when it is monitored that the user equipment corresponding to the first user equipment information logs in to the configuration page; and
the monitoring submodule, configured to set the router configuration information to a non-modifiable state when it is monitored that the user equipment corresponding to the first user equipment information logs in to the configuration page.

7. The router authority management system according to claim 5, further comprising:
a pre-processing module, configured to provide in advance a setting page configured to set the first user equipment information and the corresponding modifiable router configuration information, and monitor, according to the first user equipment information acquired from the setting page and a corresponding modifiable router configuration option, whether the information of the currently connected second user equipment comprises the first user equipment information.

8. The router authority management system according to claim 6 or 7, wherein the setting page further comprises an authorization distance configured to set the modifiable router configuration information.

9. A router, comprising: a management system as defined in any one of claims 5 to 8.
